# EUROPÄISCHE PATENTANMELDUNG

(11) **EP 2 485 008 A1**
(43) Veröffentlichungstag der Anmeldung: **08.08.2012**
(21) Anmeldenummer: 12150125.8
(22) Anmeldetag: 04.01.2012
(51) Int. Cl.: G01B 5/00, G01B 5/245, G01B 21/04, G01B 21/22, G01B 21/24

(54) **Vorrichtung zur Messung eines Werkstückes und Verfahren zur Messung**

(30) Priorität: 04.02.2011 DE 102011003652
(71) Anmelder: ZF Friedrichshafen AG, 88038 Friedrichshafen (DE)
(72) Erfinder: Di Vito, Antonio, 88097 Eriskirch (DE)

(57) **Zusammenfassung**

Die Erfindung betrifft eine Vorrichtung zur Messung eines rotationssymmetrischen Werkstückes (2) mit mindestens einer Querbohrung, umfassend eine Werkstückaufnahme (3) und eine Messeinrichtung, wobei die Werkstückaufnahme (3) eine Längsachse (x) und eine Querachse (y), zwei sich in Richtung der Längsachse (x) erstreckenden Seitenwangen (9, 10) und zwei sich in Richtung der Querachse (y) erstreckende, V-förmig angeordnete Auflageflächen (12, 13) und die Messeinrichtung mindestens zwei symmetrisch zur Querachse (y) angeordnete Messtaster (14, 15) aufweisen.

## Beschreibung

Die Erfindung betrifft eine Vorrichtung zur Messung eines rotationssymmetrischen Werkstückes mit mindestens einer Querbohrung sowie ein Verfahren zur Messung des rotationssymmetrischen Werkstückes.

Vorrichtungen zur Messung von rotationssymmetrischen Werkstücken, z. B. Wellen sind bekannt, wobei als Messwertaufnehmer Messtaster, meistens induktive Messtaster, welche den gemessenen Weg in ein elektrisches Signal umwandeln, Verwendung finden. Die Messtaster können in radialer oder axialer Richtung in Bezug auf das Werkstück zugestellt werden.

Der Erfindung liegt die Aufgabe zu Grunde, einerseits eine normgerechte Symmetrieprüfung und andererseits die Winkligkeit der Querbohrung in Bezug auf die Längsachse (Rotationsachse) des Werkstückes zu überprüfen.

Die Aufgabe der Erfindung wird durch die unabhängigen Ansprüche 1 und 10 gelöst. Vorteilhafte Ausgestaltungen ergeben sich aus den Unteransprüchen.

Nach einem ersten Aspekt der Erfindung weist die Messvorrichtung eine Werkstückaufnahme und eine Messeinrichtung auf, wobei die Werkstückaufnahme Seitenwangen sowie V-förmig angeordnete Auflageflächen in Form eines Auflageprismas aufweist, welches sich quer zur Längsrichtung des Werkstückes erstreckt. Die Messeinrichtung umfasst zwei Messtaster, welche symmetrisch beiderseits des Auflageprismas angeordnet und radial zustellbar sind. Durch die Seitenwangen wird das rotationssymmetrische Werkstück in Quer-, d. h. in y-Richtung fixiert. Durch das Auflageprisma wird das Werkstück in der Vertikalen, d. h. in z-Richtung abgestützt und in Längsrichtung, d. h. in x-Richtung fixiert. Hierzu wird in die in das in Werkstück eingebrachte Querbohrung ein Auflagestift, auch Zylinderstift genannt, passgenau eingesetzt, der das Werkstück nach beiden Seiten überragt, sodass die überragenden Enden des Auflagestiftes in dem Auflageprisma zur Auflage kommen und ausgerichtet werden.

Nach einer bevorzugten Ausführungsform sind die Messtaster in einer ersten Seitenwange angeordnet und befestigt, so dass die Tastköpfe an den Spitzen der Messtaster durch die Seitenwange hindurchragen und das Werkstück kontaktieren. Die Tastköpfe sind zylinderförmig ausgebildet und in der z- Richtung bzw. um 90° zu der Rotationsachse ausgerichtet.

Nach einer weiteren bevorzugten Ausführungsform weisen die symmetrisch zum Auflagestift und damit symmetrisch zur Mittelachse der Querbohrung angeordneten Messtaster einen vorbestimmten Abstand auf. Dieser Abstand bestimmt die Genauigkeit der Messung. Je größer der Abstand der Messtaster gewählt wird, desto größer ist die Genauigkeit der Messung. Ergeben beide Messungen denselben Wert, liegt also keine Abweichung vor, so ist die Rechtwinkligkeit der Querbohrung gegeben. Wenn man die Differenz zwischen Messtaster 1 und Messtaster 2 berechnet erhält man die genaue Rechtwinkligkeitsabweichung.

Nach einer weiteren bevorzugten Ausführungsform ist auf der Innenseite der Seitenwange ein schneidenförmiger Anschlag angeordnet. Dadurch wird das Werkstück in Quer- oder y-Richtung fixiert. Der Anschlag kann je nach Durchmesser des Werkstückes durch kleinere oder größere ersetzt werden. Insofern ist die Werkstückaufnahme für unterschiedliche Durchmesser verwendbar.

Nach einer weiteren bevorzugten Ausführungsform bilden die Auflageflächen einen Winkel von 90°. Dadurch werden eine genaue Positionierung des Auflagestiftes im Auflageprisma und damit eine Ausrichtung des Werkstückes erreicht.

Nach einer weiteren bevorzugten Ausführungsform sind die Auflageflächen in die Seitenwangen eingearbeitet. Damit ergibt sich eine kompakte Vorrichtung, welche mit Hilfe der Seitenwangen und der geneigten Auflageflächen eine Fixierung des Werkstückes in x-, y- und z-Richtung ermöglicht.

Nach einer weiteren bevorzugten Ausführungsform ist an der Werkstückaufnahme eine Säule mit einem auf der Säule in senkrechter Richtung verschiebbaren Niederhalter angeordnet, welcher vorzugsweise als Feder ausgebildet ist und das Werkstück auf die Auflageflächen des Auflageprismas drückt. Damit sollen eine sichere, spielfreie Auflage des Werkstückes gewährleistet und Messfehler vermieden werden.

Nach einer weiteren bevorzugten Ausführungsform umfasst die Werkstückaufnahme einen in Richtung der Längsachse des Werkstückes angeordneten Werkstückhalter, in welchem das Werkstück unterstützt wird. Dies ist insbesondere bei längeren Werkstücken, wie z. B. Schaltschienen vorteilhaft. Je nach Länge des Werkstückes kann der Werkstückhalter verschoben und über eine Rastung fixiert werden.

Nach einer weiteren bevorzugten Ausführungsform umfasst die Messeinrichtung einen Höhenmesser, welcher die Höhe des Werkstückes in senkrechter Richtung, d. h. in z-Richtung misst. Der Höhenmesser kann als separate Einrichtung zur Messeinrichtung mit den beiden Messtastern ausgebildet sein.

Nach einem weiteren Aspekt der Erfindung erlaubt die Vorrichtung die Anwendung eines besonderen erfindungsgemäßen Messverfahrens, welches zunächst darin besteht, dass in die mindestens eine Querbohrung in dem Werkstück ein Auflagestift passgenau eingebracht wird, und zwar in der Weise, dass er beidseitig über das Werkstück hinaus steht. Das Werkstück wird dann koaxial zur Längsachse der Werkstückaufnahme positioniert, wobei der Auflagestift auf dem quer verlaufenden Auflageprisma aufgelegt wird, sodass er das Werkstück unterstützt und trägt. Dadurch ist das Werkstück über die Querbohrung ausgerichtet.

Nach einer bevorzugten Variante wird zunächst eine normgerechte Symmetrieprüfung des Werkstückes durchgeführt, indem mittels des Höhenmessers die Erstreckung des Werkstückes in senkrechter Richtung, d. h. in z-Richtung gemessen wird. Anschließend wird das Werkstück um 180°um seine Längsachse gedreht, und die Höhenmessung wird wiederholt. Liegt keine Abweichung vor, ist Symmetrie gegeben. Aus der Differenz zwischen 1. und 2. Messung ergibt sich die Symmetrieabweichungen.

Nach einer weiteren bevorzugten Variante wird anschließend die Winkligkeit der Querbohrung überprüft, d. h. es werden der Winkel der Mittelachse der Querbohrung und der Längsachse des Werkstückes messtechnisch überprüft. Dazu messen beide Messtaster in radialer Richtung den Durchmesser des Werkstückes, und zwar symmetrisch in gleichen Abständen zur Mittelachse der Querbohrung. Ergibt sich hier keine Abweichung, sondern gleiche Werte, so ist die geforderte Winkligkeit gegeben. Aus der Abweichung/ Differenz der Messtaster ergibt sich die Rechtwinkligkeitsabweichung.

Ein Ausführungsbeispiel der Erfindung ist in der Zeichnung dargestellt und wird im Folgenden näher beschrieben, wobei sich aus der Beschreibung und/oder der Zeichnung weitere Merkmale und/oder Vorteile ergeben können. Es zeigen
- Fig. 1: einen Längsschnitt durch die erfindungsgemäße Messvorrichtung mit Werkstück,
- Fig. 2: eine Draufsicht auf die Messvorrichtung gemäß Fig. 1,
- Fig. 3: einen Schnitt durch die Werkzeugaufnahme mit Messvorrichtung und
- Fig. 4: eine Seitenansicht der Werkzeugaufnahme.

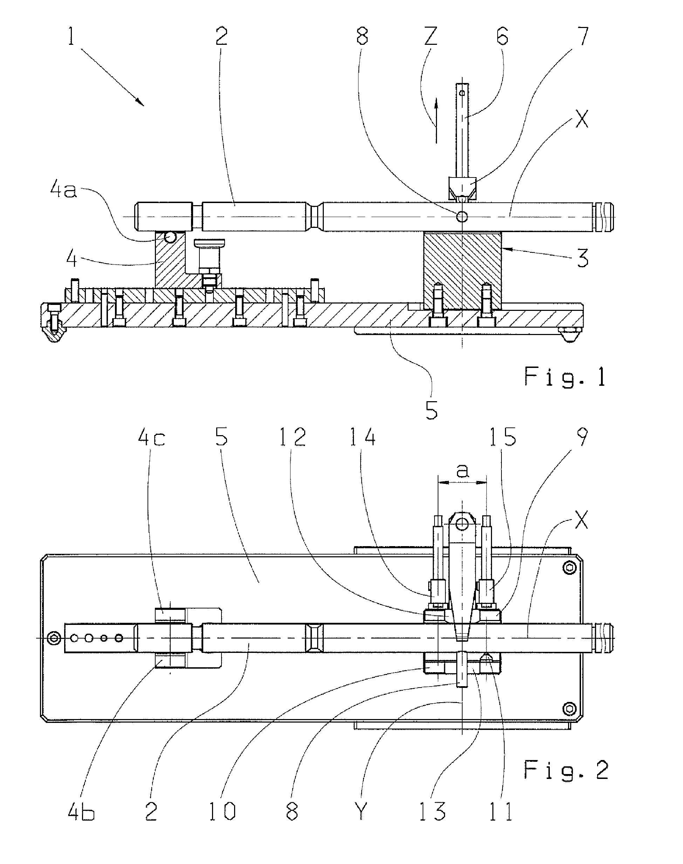

Fig. 1 zeigt einen Längsschnitt durch eine Vorrichtung 1 zur Messung eines rotationssymmetrischen Werkstückes 2, hier als Schaltschiene für ein nicht dargestelltes Schaltgetriebe eines Kraftfahrzeuges ausgebildet, im Folgenden auch kurz Mess- oder Prüfvorrichtung 1 genannt. Die Prüfvorrichtung 1 umfasst eine Werkstückaufnahme 3 sowie einen Halter 4, welche längsbeweglich auf einer Grundplatte 5 befestigt sind. Die Werkstückaufnahme 3 umfasst eine Säule 6, an welcher ein Niederhalter 7 längsbeweglich, d. h. in senkrechter Richtung, dargestellt durch einen Pfeil z, angeordnet ist. Das Werkstück 2, auch Prüfling 2 genannt, weist eine Querbohrung (ohne Bezugszahl) auf, in welche ein zylindrischer Stift 8 eingesetzt ist, welcher die Schaltschiene 2 gegenüber der Werkstückaufnahme 3 abstützt. Der Halter 4 weist eine Zylinderrolle 4a auf, welche das andere Ende des Prüflings 2 trägt.

Fig. 2 zeigt eine Draufsicht auf die Messvorrichtung 1 mit Grundplatte 5. Der zylindrische Stift 8, welcher passgenau in die Querbohrung der Schaltschiene 2 eingesetzt ist, ist wesentlich länger als der Durchmesser der Schaltschiene 2, so dass er diese nach beiden Seiten überragt. Die Werkstückaufnahme 3 umfasst eine erste Seitenwange 9 und eine zweite Seitenwange 10, an welcher ein schneidenförmiger Anschlag 11 befestigt ist, welcher den Prüfling 2 gegenüber der ersten Seitenwange 9 in radialer Richtung fixiert. In die erste Seitenwange 9 und die zweite Seitenwange 10 sind V-förmig angeordnete Auflageflächen 12, 13 eingearbeitet, welche ein Auflageprisma bilden, in welchem der Zylinderstift 8 aufliegt und somit den Prüfling 2 abstützt. Das andere Ende des Prüflings 2 ist auf dem Halter 4 axial beweglich abgestützt.

Durch den Zylinderstift 8, auch Auflagestift 8 genannt, und die beiden Auflageprismen 12, 13 ist das Werkstück 2 in axialer Richtung in der Werkzeugaufnahme 3 fixiert. Der Niederhalter 7, der vorzugsweise federnd ausgebildet ist, drückt das Werkstück in das Auflageprisma 12, 13. An der Werkzeugaufnahme 3 sind im Bereich der ersten Seitenwange 9 zwei Messtaster 14, 15 befestigt, welche durch die erste Seitenwange 9 hindurchgeführt sind und das Werkstück 2 kontaktieren. Die beiden Messtaster 14, 15, vorzugsweise als Induktiv-Messtaster ausgebildet, sind symmetrisch zur Längsachse des Zylinderstifts 8 in einem definierten Abstand a zueinander angeordnet. Die Mittelachse des Zylinderstiftes 8 ist mit y, und die Längsachse des Werkstückes 2 ist mit x bezeichnet. Der Halter 4 (vgl. Fig. 1) weist zwei Seitenführungen 4b, 4c auf, welche die Schaltschiene 2 seitlich führen.

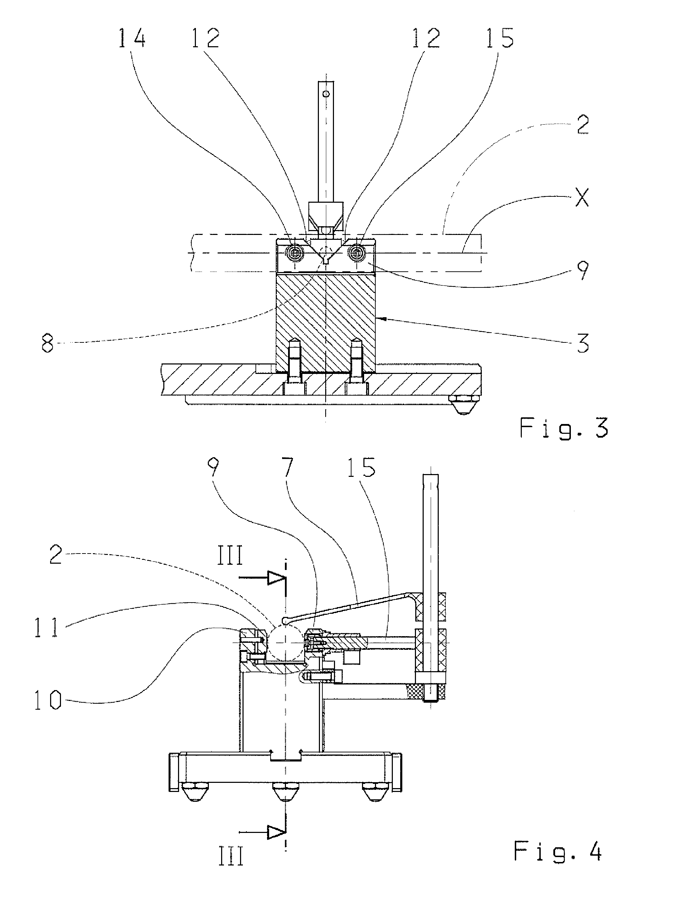

Fig. 3 zeigt eine vergrößerte Darstellung der Werkzeugaufnahme 3 als Schnitt in der Ebene III - III in Fig.4, wobei das Werkstück 2 mit dem Zylinderstift 8 gestrichelt dargestellt ist. Die Mittelachse des Werkstückes 2 ist wiederum mit x bezeichnet. Auf Höhe der Mittelachse x liegen die Mittelpunkte der Messtaster 14, 15. Die Schnittdarstellung zeigt die erste Seitenwange 9 in einer Ansicht, wobei die V-förmig angeordneten, ebenen Auflageflächen 12 in einem Winkel von 90° erscheinen. In diesem Auflageprisma 12 ist der Zylinderstift 8 derart positioniert, dass seine Mittelachse y (vgl. Fig. 2) auf Höhe der Längsachse x des Werkstückes 2 liegt.

Fig. 4 zeigt die Werkstückaufnahme 3 in einer Seitenansicht und teilweise im Schnitt, wobei das Werkstück 2 als gestrichelter Kreis dargestellt ist und durch den Niederhalter 7 nach unten gedrückt wird. Das Werkstück 2 ist zwischen den beiden Setenwangen 9, 10 durch den Anschlag 11 in radialer Richtung fixiert und wird auf Höhe eines horizontalen Durchmessers vom Messtaster 15 berührt.

Die oben beschriebene Mess- oder Prüfvorrichtung 1 dient der Messung oder Prüfung von rotationssymmetrischen Teilen bezüglich ihrer Symmetrie und der Rechtwinkligkeit von Querbohrungen, welche in dem Werkstück 2 angeordnet sind. Die Längsachse y der Querbohrung soll also rechtwinklig zur Längsachse x des Werkstückes, im bevorzugten Falle einer Schaltschiene 2 verlaufen. Durch die Symmetrieprüfung, welche nach DIN genormt ist, soll überprüft werden, ob die Querbohrung symmetrisch in die Schaltschiene 2 gebohrt wurde, also in der Mitte sitzt. Die weitere Prüfung des Werkstückes 2 umfasst die Überprüfung der Winkligkeit. Zunächst wird - wie oben bereits erwähnt - in die betreffende Querbohrung des Werkstückes 2 ein passender Zylinderstift 8 (möglich ist auch ein leicht konischer Stift) eingesetzt, so dass dieser beidseitig über das Werkstück 2 hinaus steht und somit in dem Auflageprisma 12, 13 der Werkzeugaufnahme 3 platziert werden kann. Damit ist die Schaltschiene 2 abgestützt und ausgerichtet. Sie liegt einerseits an der ersten Seitenwange 9 und andererseits am Anschlag 11 an. Mit einem nicht dargestellten Höhenmesser wird zunächst das Höhenmaß der Schaltschiene 2 gemessen und gespeichert. Der Höhenmesser wird ähnlich bewegt, wie der Niederhalter 7 auf der Säule 6, d. h. in senkrechter Richtung, in Fig. 1 durch einen Pfeil z dargestellt. Nach dieser ersten Messung wird die Schaltschiene 2 angehoben, um 180° um ihre Längsachse x gedreht und wieder in dem Auflageprisma 12, 13 platziert und ausgerichtet. Dann erfolgt die zweite Höhenmessung, d. h. der entgegengesetzten Seite des Prüflings 2. Beide Höhenmaße werden miteinander verglichen. Liegt der Differenzbetrag unter einer vorbestimmten Toleranz, so ist die Symmetrieprüfung in Ordnung. Ist die Abweichung bei der Höhenmessung zu groß, ist die Symmetrieprüfung nicht bestanden. Es folgt die Prüfung auf Winkligkeit der Querbohrung, welche mittels der beiden Messtaster 14, 15 erfolgt, die wie oben erwähnt, symmetrisch, d. h. in gleichen Abständen zur Mittelachse y des Zylinderstifts 8 angeordnet sind. Die Messtaster 14, 15 messen in y-Richtung bzw. in radialer Richtung des Werkstückes 2. Liegen keine Abweichung beider Messwerte oder eine Abweichung unterhalb eines Toleranzwertes vor, ist das Werkstück 2 in Ordnung, d. h. die Querbohrung mit dem Zylinderstift 8 genügt den Anforderungen an die Rechtwinkligkeit. Liegen die Messwerte zu weit auseinander, liegt keine Rechtwinkligkeit vor.

Bezugszeichen
- 1: Messvorrichtung
- 2: Werkstück (Schaltschiene)
- 3: Werkstückaufnahme
- 4: Halter
- 4a: Zylinderrolle
- 4b: Seitenführung
- 4c: Seitenführung
- 5: Grundplatte
- 6: Säule
- 7: Niederhalter
- 8: Zylinderstift
- 9: erste Seitenwange
- 10: zweite Seitenwange
- 11: Anschlag
- 12: Auflageflächen
- 13: Auflageflächen
- 14: Messtaster
- 15: Messtaster

- a: Abstand der Messtaster
- x: Längsachse Werkstück
- y: Längsachse Zylinderstift
- z: vertikale Richtung

## Patentansprüche

1. Vorrichtung zur Messung eines rotationssymmetrischen Werkstückes (2) mit mindestens einer Querbohrung, umfassend eine Werkstückaufnahme (3) und eine Messeinrichtung, wobei die Werkstückaufnahme (3) eine Längsachse (x) und eine Querachse (y), zwei sich in Richtung der Längsachse (x) erstreckenden Seitenwangen (9, 10) und zwei sich in Richtung der Querachse (y) erstreckende, V-förmig angeordnete Auflageflächen (12, 13) und die Messeinrichtung mindestens zwei symmetrisch zur Querachse (y) angeordnete Messtaster (14, 15) aufweisen.

2. Vorrichtung nach Anspruch 1, **dadurch gekennzeichnet, dass** die Messtaster (14, 15) in der ersten Seitenwange (9) angeordnet und radial auf das Werkstück (2) zustellbar sind.

3. Vorrichtung nach Anspruch 2, **dadurch gekennzeichnet, dass** die Mittelachsen der Messtaster einen vorbestimmten Abstand (a) aufweisen.

4. Vorrichtung nach Anspruch 1, 2 oder 3, **dadurch gekennzeichnet, dass** an der zweiten Seitenwange (10) ein schneidenförmig ausgebildeter Anschlag (11) diametral zu einem (15) der beiden Messtaster (14, 15) angeordnet ist.

5. Vorrichtung nach einem der vorhergehenden Ansprüche, **dadurch gekennzeichnet, dass** die Auflageflächen (12, 13) einen Winkel von 90° miteinander bilden.

6. Vorrichtung nach einem der vorhergehenden Ansprüche, **dadurch gekennzeichnet, dass** die Auflageflächen (12, 13) in die Seitenwangen (9, 10) eingearbeitet sind.

7. Vorrichtung nach einem der vorhergehenden Ansprüche, **dadurch gekennzeichnet, dass** die Werkstückaufnahme (3) eine Säule (6) mit einem Werkstückniederhalter (7) aufweist.

8. Vorrichtung nach einem der vorhergehenden Ansprüche, **dadurch gekennzeichnet, dass** die Werkstückaufnahme (3) einen Halter (4, 4a, 4b, 4c) umfasst, welcher in Richtung der Längsachse (x) der Werkstückaufnahme (3) verstellbar angeordnet ist.

9. Vorrichtung nach einem der vorhergehenden Ansprüche, **dadurch gekennzeichnet, dass** die Messeinrichtung einen Höhenmesser für die Messung des Werkstückes (2) in z-Richtung umfasst.

10. Verfahren zur Messung eines rotationssymmetrischen Werkstückes (2) mit mindestens einer Querbohrung mittels einer Vorrichtung nach einem der Ansprüche 1 bis 9, **dadurch gekennzeichnet, dass** in die mindestens eine Querbohrung ein beidseitig aus dem Werkstück (2) herausragender Zylinderstift (8) eingebracht, dass das Werkstück (2) koaxial zur Längsachse (x) in der Werkstückaufnahme (3, 9, 10, 11) positioniert und der Zylinderstift (8) auf den Auflageflächen (12, 13) zur Auflage gebracht und ausgerichtet werden.

11. Verfahren nach Anspruch 10, **dadurch gekennzeichnet, dass** mittels eines Höhenmessers die Höhe des Werkstückes (2) in z-Richtung in einer ersten Position und in einer zweiten Position, welche gegenüber der ersten Position um 180° um die Längsachse (x) verdreht ist, gemessen wird.

12. Verfahren nach Anspruch 10 oder 11, **dadurch gekennzeichnet, dass** die Erstreckung des Werkstückes (2) in y-Richtung über die beiden symmetrisch zum Zylinderstift (8) angeordneten Messtaster (14, 15) gemessen, ein Differenzwert der Messwerte gebildet und mit einem vorgegebenen Toleranzwert verglichen werden.
